(19) Europäisches Patentamt

European Patent Office

Office européen des brevets

(11) **EP 1 812 261 B1**

(12) **EUROPEAN PATENT SPECIFICATION**

(45) Date of publication and mention
of the grant of the patent:
**23.06.2010 Bulletin 2010/25**

(51) Int Cl.:
***B60P 5/00*** *(2006.01)*     ***B62D 53/08*** *(2006.01)*
***G01G 19/08*** *(2006.01)*

(21) Application number: **05793905.0**

(22) Date of filing: **18.10.2005**

(86) International application number:
**PCT/SE2005/001553**

(87) International publication number:
**WO 2006/046903 (04.05.2006 Gazette 2006/18)**

(54) **A METHOD AND A SYSTEM FOR DETERMINING THE LOAD TRANSFERRED FROM A SEMI-TRAILER TO A FIRST AXLE OF A TOWING VEHICLE**

VERFAHREN UND SYSTEM ZUR BESTIMMUNG DER VON EINEM SATTELAUFLIEGER AUF EINE ERSTE ACHSE EINES SCHLEPPFAHRZEUGS ÜBERTRAGENEN LAST

PROCEDE ET SYSTEME DE DETERMINATION DE LA CHARGE TRANSFEREE D'UN SEMI-REMORQUE A UN PREMIER ESSIEU D'UN VEHICULE REMORQUEUR

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.10.2004 SE 0402633**

(43) Date of publication of application:
**01.08.2007 Bulletin 2007/31**

(73) Proprietor: **VOLVO LASTVAGNAR AB**
**405 08 Göteborg (SE)**

(72) Inventors:
• **LILJEBLAD, Benny**
**S-443 38 Lerum (SE)**
• **VIKSTRÖM, Tobias**
**S-443 38 Lerum (SE)**
• **TERBORN, Bengt**
**S-424 70 Olofstorp (SE)**

(74) Representative: **Fröhling, Werner Otto**
**Volvo Technology Corporation**
**Corporate Patents 06820, M1.7**
**405 08 Göteborg (SE)**

(56) References cited:
**WO-A-03/044471**     **WO-A2-03/044471**
**US-A- 4 505 344**     **US-A- 4 505 344**
**US-A- 4 854 407**     **US-A- 5 610 372**
**US-A- 5 677 498**     **US-A- 5 863 057**
**US-A- 5 863 057**

**Description**

TECHNICAL FIELD:

The present invention relates to a method and a system for determining the load transferred from a semi-trailer to a first axle of a towing vehicle, which has at least one further, second axle, the semi-trailer being partly supported by the towing vehicle at a supporting site thereof.

Such a system and method are known from WO 03/044471.

BACKGROUND ART:

US patent No. 6,203,045 discloses an articulated lorry with a control system for redistributing the weight among wheel axles. A plurality of sensors is associated with the plurality of wheel axles on the vehicle, and an electronic controller gathers information from the sensors and determines the weight at each axle.

This known system comprising at least one weight sensor at each wheel axle is rather complicated. While the rear wheel axle(s) is/are usually suspended by fluid springs the front axle is usually suspended by mechanical springs. Because it is more complicated and expensive to install an efficient weight sensor when a wheel axle is suspended by mechanical springs than when it is suspended by fluid (hydraulic and/or gas) springs, it would be advantageous if installation of a load or weight sensor at a selected wheel axle could be avoided.

DISCLOSURE OF THE INVENTION:

This is obtained by the present invention, which provides a method of determining the load transferred from a semi-trailer to a first axle of a towing vehicle, which has at least one further, second axle, the semi-trailer being partly supported by the towing vehicle at a supporting site thereof, said method comprising determining a first value representing the load transferred from the semi-trailer to said at least one further, second axle and determining a second value representing the position of the supporting site in relation to said axles using a position detecting device, and the system according to the invention is characterised in calculating a value representing the load transferred from the semi-trailer to the first axle based on said first and second values. Such a towing vehicle is often referred to as a tractor.

By the method according to the invention it is possible to determine how an unknown load transferred from a semi-trailer to at vehicle towing the same is distributed to the axels of the towing vehicle, provided that the load supported by the said second axle and the position of the supporting site or the so-called "fifth wheel" are known. Since the supporting site or "fifth wheel" is moveable, the position of the supporting site or "fifth wheel" is determined using a position detecting device. The load transferred to the first axle or a value representing the same may, for example, be calculated by using static calculations. The net weight or unladen weight of the towing vehicle and also the fraction of such weight supported by the axels of the vehicle are usually known. Therefore, also the total load or weight supported by each of the first and second axle may be determined, if desired.

The position of the supporting site or "fifth wheel" in relation to the axles of the towing vehicle may be changed in order to obtain a desired weight or load distribution on the axles of the towing vehicle, for example to maintain desired braking and/or steering characteristics of the combined vehicle and semi-trailer. The movement of the "fifth wheel" may be manually operated or performed automatically by means of an electronic control device in accordance with predetermined programs.

The supporting site or "fifth wheel" is advantageously displaced between predetermined positions along a track extending longitudinally of the towing vehicle. The "fifth wheel" may, for example, be releasable locked in any of the predetermined positions. The actual position of the supporting site or "fifth wheel" may be determined by any conventional means. In the invention the supporting site is defined by a displaceable supporting member, which is connected to a fixed part of the towing vehicle by means of an articulated rod member, and the position of the supporting member may then be determined based on the mutual angular position of the rod member parts.

The first axle is usually a front axle while the second axle is a rear axle, and the supporting site is positioned between the front and rear axles of the towing vehicle. However, the said first axle may also be a rear axle. The towing vehicle may have a rear axle in the form of a bogie, or a pair of closely adjacent rear axles. In the latter case the load transferred to such pair of second axles may be determined for each such axle or at a common point of load application.

The load L1 transferred from the semi-trailer to the first axle may be calculated based on the following equation:

$$L1 * d1 = L2 * d2$$

or

$$L1 = L2 * \frac{d2}{d1}$$

where the load transferred from the semi-trailer to the second axle is L2 and the longitudinal distances between the supporting site and the first and second axles are d1 and d2, respectively.

If desired, the total load L3 transferred from the semi-trailer to the towing vehicle at said supporting site may be calculated from the equation

$$L3 = L1 + L2$$

The present invention also provides a system for determining the load transferred from a semi-trailer to a first axle of a towing vehicle, which has at least one further, second axle, the semi-trailer being partly supported by the towing vehicle at a supporting site thereof, said system comprising a load sensing device for determining a first value representing the load transferred from the semi-trailer to said at least one further, second axle and a position detecting device for determining a second value representing the position of the supporting site in relation to said axles, and the system according to the invention is characterised in an electronic calculator adapted to receive signals from the load sensing device and from the position detecting device representing said first and second values, respectively, and to calculate a value representing the load transferred from the semi-trailer to the first axle based on said first and second values. Such system may further comprise a display device communicating with the electronic calculator and adapted to display any of the values received and/or calculated by the calculator. The display device is preferably arranged within the driver's cab so that it can be surveyed by the driver.

BRIEF DESCRIPTION OF DRAWINGS:

The invention will now be further exemplarily described with reference to the drawings, wherein

Fig. 1 is a diagrammatic side view of a towing vehicle and a semi-trailer connected thereto including a system according to the invention, and

Fig. 2 is a perspective view in an enlarged scale of an embodiment of a coupling device or "fifth wheel" of the vehicle shown in fig. 1.

MODES FOR CARRYING OUT THE INVENTION:

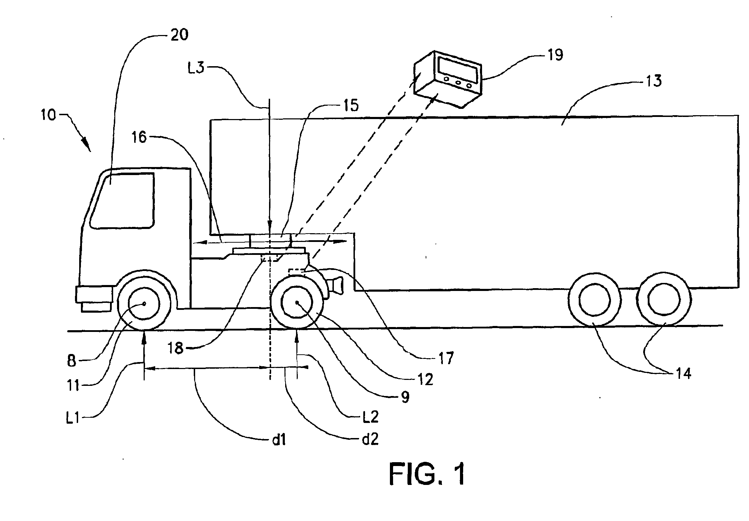

Fig 1 illustrates a towing vehicle or tractor 10 having a front axle 8 with front wheels 11 and a rear axle 9 with rear wheels 12. A semi-trailer 13 has a rear bogie comprising two pairs of wheels 14 and is releasable coupled to the towing vehicle 10 by means of a coupling device 15, which is longitudinally displaceable in relation to the vehicle 10 as indicated by a double arrow 16 and forms part of the so-called "fifth wheel". A load L3 is transferred from the semi-trailer 13 to the "fifth wheel" or coupling device 15 and part L1 of this load is supported by the front axle 8 with front wheels 11 and part L2 is supported by the rear axle 9 with rear wheels 12 of the towing vehicle 10.

The tractor 10 is in this example equipped with a leaf sprig as the front axle suspension and an air spring as the rear axle suspension. The axle load for an axle suspended by a leaf spring is difficult to measure in a direct way. This is normally done with a displacement sensor that senses the displacement of the axle and this signal is then transferred to a load value using an equation that compensates for the spring characteristics. The axle load for an axle suspended by an air spring is on the other hand easy to determine, since the axle load can be derived from the air pressure in the air bellows. The air pressure in the air bellows is normally measured on vehicles with air springs. The axle load for that axle is therefore normally available from the electronic air suspension system.

The total load or weight supported by the rear axle 9 is determined by a weight sensor 17, which may be arranged in connection with a hydraulic and/or gas spring suspension system. A known contribution to this total load resulting from the net weight of the towing vehicle 10 should be deducted from the value determined by the sensor 17 in order to arrive at the load value L2. A position detector 18 described more in detail below determines the position of the coupling device or "fifth wheel" 15. In fig. 1 the axial distance between the front axle and the coupling device 15 is d1 while the axial distance between the rear axle and the coupling device 15 is d2.

When the values L2, d1 and d2 have been determined the value L1 can be calculated from the equation:

$$L1 * d1 = L2 * d2$$

or

$$L1 = L2 * \frac{d2}{d1}$$

L1 is the load contribution from the load L3 supported by the front axle 8. If the total load or weight supported by the front axle 8 is to be determined a known contribution from the net weight of the vehicle 10 has to be added. It should be understood that in this way it is possible to determine the total loads supported by the front and rear axles 8 and 9, respectively, and/or the relative weight distribution on the front and rear axles when the load L2 and the spacing d1 and d2 are determined by means of the sensor 17 and the detector 18, respectively. As indicated in fig. 1 measuring signals from the weight sensor 17 and from the position detector 18 may be transmitted to an electronic calculating and display device 19, which is arranged within the driver's cab 20. However, in fig. 1 the device 19 is illustrated outside for illustrative reasons. The electronic calculating and display device 19 may also be integrated in the electronic control system of the vehicle. The device may also include a control device for automatically moving the "fifth wheel" 15 so as to obtain a desired load distribution on the front and rear axles 8 and 9 in accordance with a predetermined scheme or program. The distance that the "fifth wheel" 15 is moved or the position of the "fifth wheel" 15 can also be displayed to the driver. This enables the driver to determine the change in the total length of the vehicle.

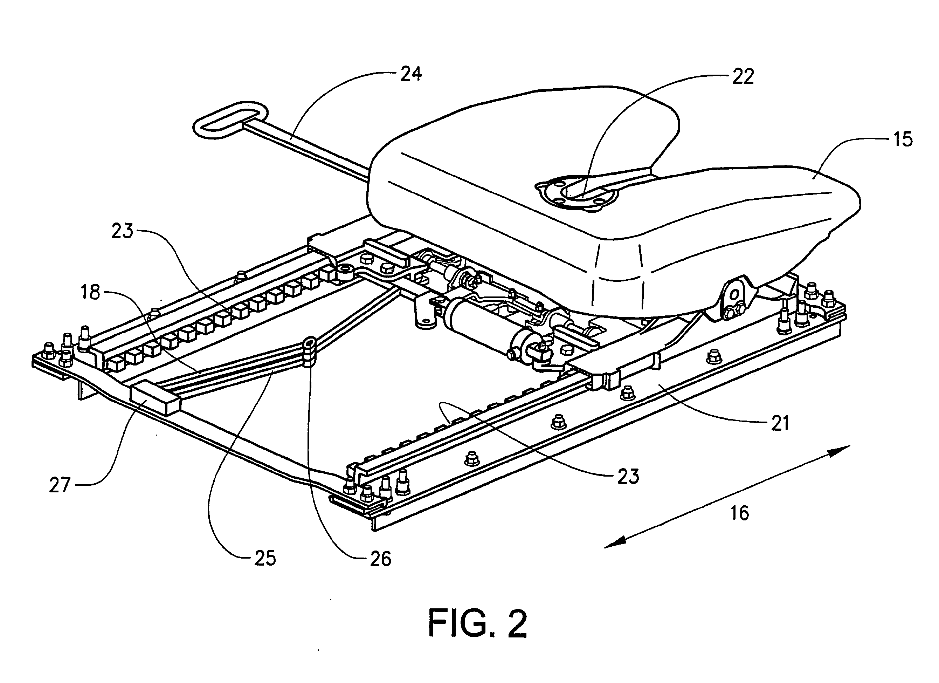

Fig. 2 illustrates an embodiment of the coupling device or "fifth wheel" 15 more in detail. The coupling device 15 is displaceable along arrow 16 in relation to a frame part 21, which is fixed to the body of the vehicle 10. The coupling device 15 defines a funnel-shaped recess 22 for receiving and releasable locking a ball-shaped connecting member (not shown) of the semi-trailer 13. Opposite rack-like formations 23 formed on the frame part 21 co-operates with corresponding locking members (not shown) formed on the displaceable coupling device 15, such that the coupling device may be displaced and releasable locked in any of a large number of possible positions by operating a handle 24. In the embodiment shown in fig. 2 the position detector 18 comprises a longitudinally extending, articulated rod member 25 having a central hinge or pivot 26. The ends of the rod member 25 are connected to the displaceable coupling device 15 and to the fixed frame part 21, respectively, such that the parts of the rod member 25, which are interconnected by the hinge 26, mutually defines an angle varying in response to the position of the displaceable coupling device 15. An angle sensor 27 determines the angle value and transmits a corresponding signal to the calculating and display device 19, which may translate the angle value into an exact position of the "fifth wheel".

It should be understood that various amendments of the embodiments described above could be made without departing from the scope of the present invention as defined in the appended claims. As an example, any other conventional type of position detector than that described above could be used for determining the position of the coupling device or "fifth wheel" 15 in relation to the positions of the front and rear axles, respectively, of the towing vehicle 10.

**Claims**

1. A method of determining the load L1 transferred from a semi-trailer (13) to a first axle (8) of a towing vehicle (10), which has at least one further, second axle (9), the semi-trailer being partly supported by the towing vehicle at a supporting site (15) thereof, wherein said position of the supporting site in relation to the axles of the towing vehicle is changeable, said method comprising:

   - determining a first value representing the load L2 transferred from the semi-trailer to said at least one further, second axle and
   - determining a second value (d1, d2) representing the position of the supporting site (15) in relation to said axles using a position detecting device (18), wherein the supporting site is determined by a displaceable supporting member which is connected to a fixed part (21) of the towing vehicle by means of the position detecting device which comprises an articulated rod member (25), the position of the supporting member being determined based on the mutual angular position of the rod member parts, and
- calculating a value representing the load L1 transferred from the semi-trailer to the first axle based on said first and second values.

2. A method according to claim 1, wherein the supporting site is displaced between predetermined positions along a track (23) extending longitudinally of the towing vehicle.

3. A method according to claim 1 or 2, wherein the first and second axles are front and rear axles, the supporting site (15) being positioned between the front and rear axles.

4. A method according to claim 3, wherein the load L1 transferred from the semi-trailer to the first axle is calculated based on the following equation:

$$L1 * d1 = L2 * d2$$

or

$$L1 = L2 * \frac{d2}{d1}$$

wherein the load transferred from the semi-trailer to the second axle is L2 and the longitudinal distances between the supporting site and the first and second axles are d1 and d2, respectively.

5. A method according to claim 4, wherein the total load L3 transferred from the semi-trailer to the towing vehicle at said supporting site is calculated from the equation

$$L3 = L1 + L2$$

6. A system for determining the load L1 transferred from a semi-trailer (13) to a first axle of a towing vehicle (8), which has at least one further, second axle (9), the semi-trailer being partly supported by the towing vehicle at a supporting site (15) thereof, said system comprising;

- a load sensing device (17) for determining a first value representing the load L2 transferred from the semi-trailer to said at least one further, second axle and
- a position detecting device (18) for determining a second value (d1,d2) representing the position of the supporting site in relation to said axles, wherein the position detecting device comprises an articulated rod member (25) interconnecting a fixed part (21) of the towing vehicle and a supporting member (15) displaceable in relation to the vehicle, and an angle sensing device (27) for determining the mutual angular position of the rod member parts, and
- an electronic calculator (19) adapted to receive signals from the load sensing device and from the position detecting device representing said first and second values, respectively, and to calculate a value L1 representing the load transferred from the semi-trailer to the first axle based on said first and second values.

7. A system according to claim 6, further comprising a display device (19) communicating with the electronic calculator and adapted to display any of the values received and/or calculated by the calculator.

8. A system according to claim 6 or 7, wherein the electronic calculator is calculating the load L1 transferred from the semi-trailer to the first axle based on the following equation:

$$L1 * d1 = L2 * d2$$

or

$$L1 = L2 * \frac{d2}{d1}$$

where the load transferred from the semi-trailer to the second axle is L2 and the longitudinal distances between the supporting site and the first and second axles are d1 and d2, respectively.

9. Computer program comprising program code for carrying out all the steps in any of claims 1 to 5 when the said program is executed by a computer.

10. Computer program product comprising program code stored on a medium that can be read by computer for carrying out the method in any of claims 1 to 5 when the said program is executed by a computer.


**Patentansprüche**

1. Verfahren zur Bestimmung der von einem Sattelanhänger (13) auf eine erste Achse (8) eines Zugfahrzeugs (10), das wenigstens eine weitere, zweite Achse (9) aufweist, übertragenen Last L1, wobei der Sattelanhänger durch das Zugfahrzeug an einer Stützstelle (15) von ihm teilweise abgestützt wird, wobei die Position der Stützstelle bezüglich der Achsen des Zugfahrzeugs veränderbar ist, wobei das Verfahren umfasst:

   - die Bestimmung eines ersten Werts, der die Last L2 repräsentiert, die von dem Sattelanhänger auf die wenigstens eine weitere, zweite Achse übertragen wird, und
   - die Bestimmung eines zweitens Werts (d1, d2), der die Position der Stützstelle (15) bezüglich der Achsen repräsentiert, unter Verwendung einer Positionserfassungsvorrichtung (18), wobei die Stützstelle durch ein verschiebbares Stützelement bestimmt wird, das mit einem festen Teil (21) des Zugfahrzeugs mittels der Positionserfassungsvorrichtung verbunden ist, die ein Gelenkstangenelement (25) umfasst, wobei die Position des Stützelements auf der Basis einer gegenseitigen Winkelposition der Stangenelementteile bestimmt wird, und
   - die Berechnung eines die von dem Sattelanhänger auf die erste Achse übertragene Last L1 repräsentierenden Werts auf der Basis des ersten und zweiten Werts.

2. Verfahren nach Anspruch 1, bei dem die Stützstelle zwischen vorherbestimmten Positionen entlang einer Bahn (23) verschoben wird, die sich in Längsrichtung des Zugfahrzeugs erstreckt.

3. Verfahren nach Anspruch 1 oder 2, bei dem die erste und zweite Achse eine Vorder- und Hinterachse ist, wobei die Stützstelle (15) zwischen der Vorder- und Hinterachse angeordnet ist.

4. Verfahren nach Anspruch 3, bei dem die von dem Sattelanhänger auf die erste Achse übertragene Last L1 auf der Basis der folgenden Gleichung berechnet wird:

$$L1*d1 = L2*d2$$

oder

$$L1 = L2 * \frac{d2}{d1}$$

wobei die von dem Sattelanhänger auf die zweite Achse übertragene Last L2 ist und die Längsabstände zwischen der Stützstelle und der ersten und zweiten Achse d1 bzw. d2 sind.

**5.** Verfahren nach Anspruch 4, wobei die Gesamtlast L3, die von dem Sattelanhänger auf das Zugfahrzeug an der Stützstelle übertragen wird, aus der Gleichung

$$L3 = L1 + L2$$

berechnet wird.

**6.** System zur Bestimmung der Last L1, die von einem Sattelanhänger (13) auf eine erste Achse eines Zugfahrzeugs (8), das wenigstens eine weitere, zweite Achse (9) aufweist, übertragen wird, wobei der Sattelanhänger teilweise durch das Zugfahrzeug an einer Stützstelle (15) von ihm abgestützt wird, wobei das System umfasst:

- eine Lasterfassungseinrichtung (17) zur Bestimmung eines ersten Werts, der die Last L2 repräsentiert, die von dem Sattelanhänger auf die wenigstens eine weitere, zweite Achse übertragen wird, und
- einer Positionserfassungsvorrichtung (18) zur Bestimmung eines zweiten Werts (d1, d2), der die Position der Stützstelle bezüglich der Achsen repräsentiert, wobei die Positionserfassungsvorrichtung ein Gelenkstangenelement (25), das einen festen Teil (21) des Zugfahrzeugs und ein Stützelement (15) miteinander verbindet, das bezüglich des Fahrzeugs verschiebbar ist, und eine Winkelerfassungsvorrichtung (27) zur Bestimmung der gegenseitigen Winkelposition der Stangenelementteile umfasst, und
- eine elektronische Recheneinrichtung (19), die dazu ausgelegt ist, Signale von der Lasterfassungsvorrichtung und von der Positionserfassungsvorrichtung zu empfangen, die den ersten bzw. zweiten Wert repräsentieren, und auf der Basis des ersten und zweiten Wertes einen Wert L1 zu berechnen, der die Last repräsentiert, die von dem Sattelanhänger auf die erste Achse übertragen wird.

**7.** System nach Anspruch 6, das außerdem eine Anzeigevorrichtung (19) umfasst, die mit der elektronischen Recheneinrichtung kommuniziert und so ausgelegt ist, dass sie jeden der Werte anzeigt, die von der Recheneinrichtung empfangen und/oder berechnet werden.

**8.** System nach Anspruch 6 oder 7, bei dem die elektronische Recheneinrichtung die von dem Sattelanhänger auf die erste Achse übertragene Last L1 auf der Basis der folgenden Gleichung berechnet:

$$L1^*d1 = L2^*d2$$

oder

$$L1 = L2 * \frac{d2}{d1}$$

wobei die von dem Sattelanhänger auf die zweite Achse übertragene Last L2 ist und die Längsabstände zwischen der Stützstelle und der ersten und zweiten Achse d1 bzw. d2 sind.

**9.** Computerprogramm mit einem Programmcode zur Ausführung aller Schritte in jedem der Ansprüche 1 bis 5, wenn das Programm durch einen Computer ausgeführt wird.

**10.** Computerprogrammerzeugnis mit einem auf einem Medium gespeicherten Programmcode, der von einem Computer zur Ausführung des Verfahrens in jedem der Ansprüche 1 bis 5 gelesen werden kann, wenn das Programm durch einen Computer ausgeführt wird.

**Revendications**

1. Procédé de détermination de la charge L1 transférée d'un semi-remorque (13) à un premier essieu (8) d'un véhicule remorqueur (10) possédant au moins un autre, second, essieu (9), le semi-remorque étant partiellement supporté par le véhicule remorqueur au niveau d'un site de support (15), la position du site de support par rapport aux essieux du véhicule remorqueur pouvant être modifiée, ledit procédé comprenant les étapes consistant à :

   - déterminer une première valeur représentant la charge L2 transférée d'un semi-remorque audit au moins un autre, second, essieu et
   - déterminer une seconde valeur (d1, d2) représentant la position du site de support (15) par rapport auxdits essieux en utilisant un dispositif de détection de position (18), le site de support étant déterminé par un élément de support déplaçable qui est relié à une partie fixe (21) du véhicule remorqueur au moyen du dispositif de détection de position qui comprend un élément formant tige articulée (25), la position de l'élément de support étant déterminée sur la base de la position angulaire mutuelle des parties de l'élément formant tige, et
   - calculer une valeur représentant la charge L1 transférée du semi-remorque au premier essieu sur la base desdites première et seconde valeurs.

2. Procédé selon la revendication 1, dans lequel le site de support est déplacé entre des positions prédéterminées le long d'une voie (23) s'étendant longitudinalement par rapport au véhicule remorqueur.

3. Procédé selon la revendication 1 ou 2, dans lequel les premier et second essieux sont des essieux avant et arrière, le site de support (15) étant positionné entre les essieux avant et arrière.

4. Procédé selon la revendication 3, dans lequel la charge L1 transférée du semi-remorque au premier essieu est calculée sur la base de l'équation suivante :

$$L1 * d1 = L2 * d2$$

ou

$$L1 = L2 * \frac{d2}{d1}$$

dans laquelle la charge transférée du semi-remorque au second essieu est représentée par L2 et les distances longitudinales entre le site de support et les premier et second essieux sont représentées par d1 et d2, respectivement.

5. Procédé selon la revendication 4, dans lequel la charge totale L3 transférée du semi-remorque au véhicule remorqueur au niveau dudit site de support est calculée à partir de l'équation :

$$L3 = L1 + L2 \, .$$

6. Système pour déterminer la charge L1 transférée d'un semi-remorque (13) à un premier essieu d'un véhicule remorqueur (8) possédant au moins un autre, second, essieu (9), le semi-remorque étant partiellement supporté par le véhicule remorqueur au niveau d'un site de support (15), ledit système comprenant :

   - un dispositif capteur de charge (17) pour déterminer une première valeur représentant la charge L2 transférée du semi-remorque audit au moins un autre, second, essieu et
   - un dispositif de détection de position (18) pour déterminer une seconde valeur (d1, d2) représentant la position du site de support par rapport auxdits essieux, le dispositif de détection de position comprenant un élément formant tige articulée (25) réalisant une interconnexion entre une partie fixe (21) du véhicule remorqueur et un élément de support (15) pouvant être déplacé par rapport au véhicule, et un dispositif capteur d'angle (27) pour déterminer la position angulaire mutuelle des parties d'élément formant tige, et

- un calculateur électronique (19) adapté pour recevoir des signaux depuis le dispositif capteur de charge et depuis le dispositif de détection de position représentant lesdites première et seconde valeurs, et pour calculer une valeur L1 représentant respectivement la charge transférée du semi-remorque au premier essieu sur la base desdites première et seconde valeurs.

**7.** Système selon la revendication 6, comprenant en outre un dispositif d'affichage (19) communiquant avec le calculateur électronique et adapté pour afficher toute valeur reçue et/ou calculée par le calculateur.

**8.** Système selon la revendication 6 ou 7, dans lequel le calculateur électronique calcule la charge L1 transférée du semi-remorque au premier essieu sur la base de l'équation suivante :

$$L1 * d1 = L2 * d2$$

ou

$$L1 = L2 * \frac{d2}{d1}$$

dans laquelle la charge transférée du semi-remorque au second essieu est représentée par L2 et les distances longitudinales entre le site de support et les premier et second essieux sont représentées par d1 et d2, respectivement.

**9.** Programme informatique comprenant un code de programme pour réaliser toutes les étapes selon l'une quelconque des revendications 1 à 5 quand ledit programme est exécuté par un ordinateur.

**10.** Produit-programme informatique comprenant un code de programme stocké sur un support qui peut être lu par ordinateur pour la mise en oeuvre du procédé selon l'une quelconque des revendications 1 à 5 quand ledit programme est exécuté par un ordinateur.

FIG. 1

FIG. 2

EP 1 812 261 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03044471 A
- US 6203045 B